# EUROPÄISCHE PATENTANMELDUNG

(11) **EP 1 337 120 A2**
(43) Veröffentlichungstag der Anmeldung: **20.08.2003**
(21) Anmeldenummer: 03090034.4
(22) Anmeldetag: 06.02.2003
(51) Int. Cl.: H04Q 7/32

(54) **Verfahren zur zentralseitig gesteuerten Aktivierung und Deaktivierung einer in einem mobilen Endgerät befindlichen Netz-Identifikations-Karte**

(30) Priorität: 14.02.2002 DE 10206522
(71) Anmelder: Vodafone Holding GmbH, 40213 Düsseldorf (DE)
(72) Erfinder: Wichura, Torsten, 40547 Düsseldorf (DE); Aengenendt, Paul, 40235 Düsseldorf (DE); Heimann, Josef, 40629 Düsseldorf (DE)
(74) Vertreter: Meissner, Peter E., Dipl.-Ing.

(57) **Zusammenfassung**

Die Anmeldung betrifft ein Verfahren zur zentralseitig gesteuerten Aktivierung und Deaktivierung einer in einem mobilen Endgerät befindlichen Netz-Identifikations-Karte (16), wobei
- über eine zentralseitige Aktivierungsschnittstelle (13) die Netz-ldentifikations-Karte (16) initial in eine Produktbuchungs-Datenbank (11) eingetragen wird,
- die Netz-ldentifikations-Karte (16) Informationen über gebuchte Dienste lokal speichern kann,
- zentralseitig Veränderungen der Produktbuchungs-Datenbank (11) vorgenommen werden können,
- ereignisgesteuert die Netz-Identifikations-Karte (16) aktiviert wird,
- die Netz-Identifikations-Karte (16) nach Aktivierung über das Netzwerk Informationen für eine Zustandsänderung der Netz-Identifikations-Karte (16) erhalten kann,
- die Netz-Identifikations-Karte (16) aufgrund der über das Netz gesendeten Informationen über die Änderungen der Produktbuchungs-Datenbank die lokal gespeicherten Informationen über gebuchte Dienste ändert,
- die Netz-Identifikations-Karte (16) deaktiviert wird, wenn keine gebuchten Dienste vorhanden sind und
- die Netz-ldentifikations-Karte (16) dauerhaft aktiviert wird, wenn gebuchte Dienste vorhanden sind.

## Beschreibung

Werden Endgeräte (z.B. Verkehrstelematik-Endgeräte im KFZ) mit einer SIM-Karte ab Werk ausgerüstet, ist es praktikabel, diese SIM-Karten u.a. über die Luftschnittstelle administrierbar zu halten, um sie z.B. in ein anderes Heimatnetz umzuhängen oder ihre Diensteeigenschaften umzuprogrammieren.
Damit eine SIM-Karte unabhängig von ihrem Aufenthaltsort im Netz auffindbar ist, wird sie in einem HLR (Home Location Register) und ortsabhängig u.a. in VLRs (Visitor Location Register) dynamisch verwaltet.
Wenn eine SIM-Karte sich mit dem Endgerät (z.B. Auto) bewegt, erzeugt diese Bewegung Last im Netz durch Signalisierungsaufwand, Zell-Hand-Over etc.
Beim Verbau der SIM-Karte ab Werk ist nicht sicher bekannt, ob sie überhaupt dienstemäßig mit Applikationen, z.B. Emergency Call, Messaging Dienste (PDA's) etc., genutzt wird.

Die EP 0 789 500 A2 offenbart ein Verfahren zur Konfigurierung einer SIM-Karte, bei welchem das Aufsuchen eines Serviceunternehmen nicht mehr notwendig ist, weil die Konfiguration femadministriert ist. Nachteil dieses Verfahrens ist, dass lediglich administrierbar ist, für welche Rufnummern diese SIM-Karte zugelassen ist. Soll eine Deaktivierung durchgeführt werden, könnten zwar die Liste der anrufbaren Rufnummern geleert werden, die SIM-Karte wäre dennoch weiterhin aktiv und kann z.B. als Empfänger auftreten und verursacht so Netzlast. Zudem ist eine Verwendung in verschiedenen Mobilfunknetzen nicht vorgesehen.

Der Erfindung lag deshalb die Aufgabe zugrunde, die Netzbetriebskosten nur entstehen zu lassen, wenn wirklich Dienste genutzt werden. Dazu ist ein Verfahren zu schaffen, das die Karte außerhalb der Netzinfrastruktur außer Betrieb setzt, aber immer wieder aktivierbar hält, um die SIM- Netzaktivitäten und ihre Kostentreiber nur wirksam werden zu lassen, wenn Dienste, die bezahlt werden, aktiviert sind.
Die Problemstellung wird durch ein Verfahren mit den Merkmalen des Anspruchs 1 gelöst. Die Unteransprüche geben zweckmäßige Weiterbildungen der Merkmale des Anspruchs 1 wieder.

Durch eine Deaktivierung der Netzidentifikationskarte - in einer vorteilhaften Ausführung des Verfahren z.B. durch eine SIM-Karte - z.B. über die Abschaltung der Stromzufuhr im Endgerät an die SIM-Karte, werden die Netzaktivitäten der SIM-Karte vermieden, wobei definierbare Ereignisse eine Aktivierung der SIM-Karte erreichen.
Das Verfahren kann durch soft- und hardwareseitige Mechanismen erzielt werden. Zentralseitig wird eine Produktbuchungs-Datenbank vorgehalten. Diese kann eine HLR sein, sie kann innerhalb des Mobilfunknetzes, aber auch außerhalb, z.B. bei einem Diensteanbieter oder PKW-Hersteller, lokalisiert sein.
Über diese Produktbuchungs-Datenbank erhält das Mobilfunknetzwerk die Information über den gewünschten Status (aktiviert, deaktiviert, gebuchte Dienste) der SIM-Karte.

Die Ereignisse, die die SIM-Karte aktiv schalten, können durch Timer definiert sein, die zu festen Zeitintervallen die Aktivschaltung vornehmen, in denen dann über das Netz eine OTA-Programmierung der Karte vorgenommen werden kann (Aufweckmechanismus). Hiermit wird eine Kopplung der Dienstefreischaltung an die SIM-Karten Aktivierung für das Netz in Verbindung mit einer Dienstebuchung durchgeführt.
Die Ereignisse können zudem auch das Verlassen oder Erreichen eines bestimmten geographischen Gebietes (Geofencing), bestimmte Parameter des Mobilfunknetzes, z.B. die Netzkennung, aber auch die MSC-Area, Base-Station-Area etc., sein.
Wenn die SIM-Karte aktiviert wird, signalisiert sie automatisch diesen Zustand dem Netz und/oder den Dienstebetreibem; dadurch kann zentralseitig ein Abrechnungsprozeß, z.B. eine Umtarifierung der Grundgebühr (von Schlafgebühr zu Aktivgebühr) oder ein Update des Aktivierungsstatus des Diensteportfolio gestartet werden.

Vorteile des Verfahrens sind die zentralseitige Steuerung des Status' der SIM-Karte.
Dadurch wird vermieden, dass der Endkunde eine Servicestation für jede Änderung des Diensteportfolios, inkl. Abmelden oder erstmaligem Anmelden, aufsuchen muss.

Des Weiteren ist es möglich, einer Gruppe von SIM-Karten bestimmte Statusinformationen zuzuweisen, indem diese initial über die Aktivierungsschnittstelle mit einer bestimmten Dienstekombination ausgestattet werden, oder indem diesen später eine
Dienstekombination übersandt wird , sobald sie sich ereignisgesteuert aktiviert haben.
Die Kriterien, durch die so eine Gruppe gekennzeichnet ist, können landesbezogen, netzbezogen, nach dem PKW-Hersteller, nach dem Modell eines PKW-Herstellers u.v.m., definiert sein.

Neben der ereignisgesteuerten Aktivierung (asynchrones Modell) ist auch eine synchrone Aktivierung umsetzbar, nach der das Mobilfunknetzwerk zu bestimmten festgelegten Zeitpunkten die Aktivierungsinformationen an die Mobilfunk-Einheiten versendet, da die SIM-Karte zu diesem Zeitpunkt ebenfalls aktiviert ist.
Eine Speicherung der Diensteinformationen auf der SIM-Karte ist nicht zwingend erforderlich, sondern diese können auch im Netzwerk gespeichert werden, in diesem Fall ist allerdings der einzige nutzbare Dienst nur die Funktion Network Access = On.

Die Service-Managementeinheit muss zum Update der Produktbuchung vom Netzwerk die Mitteilung erhalten, wann die SIM-Karte ins Netz eingebucht ist. Alternativ kann die Service-Management-Einheit aber auch eine SMS über den Store & Forward-Mechanismus des Netzes versenden.

In einer vorteilhaften Ausprägung des Verfahrens sendet die Mobilfunkeinheit an das Netzwerk eine Empfangsbestätigung, sobald eine Aktivierungsinformation in der Mobilfunkeinheit eingetroffen ist und von der aktiven SIM-Karte verarbeitet, d.h. zumindest gespeichert wurde. Diese Empfangsbestätigung wird vom Mobilfunknetzwerk entgegengenommen und initiiert eine Kennzeichnung in der Produktbuchungs-Datenbank, dass die gebuchten Dienste für diese SIM-Karte nun abrechenbar sind.

Vorteilhaft ist des weiteren eine verschlüsselte Übertragung der Daten zwischen Mobilfunk-Netzwerk und Mobilfunkeinheit, sowohl für die Aktivierungsinformationen, als auch für die Empfangsbestätigung.

Das Verfahren erlaubt die Anwendung für verschiedene Mobilfunk-Netzwerke in verschiedenen Ländern parallel, d.h. die SIM-Karte kann in verschiedenen Mobilfunknetzwerken länderübergreifend sein Produktportfolio abrufen. Hierzu ist eine entsprechende Infrastruktur des Austausches von Daten zwischen den Netzwerken notwendig.
Das in den unabhängigen und abhängigen Ansprüchen beschriebene Verfahren ist umsetzbar für jedes Mobilfunknetz, z.B. in einem GSM-Netz und für unterschiedliche Ausprägungen der Netz-Identifikations-Karte, z.B. als SIM-Karte.

Die Erfindung soll an Ausführungsbeispielen anhand der Zeichnung näher erläutert werden.

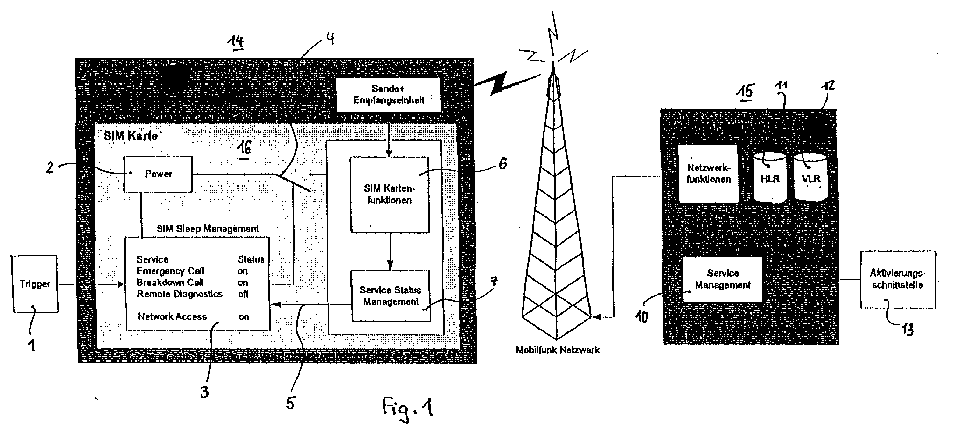

Fig. 1 zeigt eine beispielhafte Implementierung des erfindungsgemäßen Verfahrens innerhalb eines GSM-Netzes ("schlafende SIM-Karte").

Es wird der Fall betrachtet, dass alle KFZ mit einer SIM-Karte ab Werk bestückt und in einem HLR im oder außerhalb des Netzes eingetragen werden. Je nach Auslieferungsstand oder Dienstebedarf eines Kunden in einem Land wird z.B. in der KFZ-Werkstatt die SIM-Karte durch Aktivierung der Stromzufuhr oder eines Softwareschalters für das Netz verfügbar.
Dies wird der KFZ-Hersteller nur machen, wenn eine Dienstebuchung für z.B. Emergency Call eines Kunden vorliegt, da er dann die Netzgebühren sowie den Mobilfunk-, Mehrwertund Telematikdienst als Bundle verkaufen kann.
Dem Netz und damit dem KFZ-Hersteller entstehen keine Kosten durch die schlafenden SIM-Karten, die in nicht aktivierten Fahrzeugen verbaut sind und im Netzabdeckungsbereich unterwegs sind.

### a) Kunde hat Dienste gebucht, das Dienste-Portfolio ist auf der SIM-Karte gespeichert

Die SIM-Karte 16 erhält über die Stromversorgung 2 Strom. Zunächst wird nur die SIM-Sleep-Management-Einheit 3 mit Strom versorgt. Die "normalen" SIM-Kartenfunktionen 6 bleiben ausgeschaltet, da die Stromzufuhr durch den Schalter 4 unterbrochen ist.

Das Diensteportfolio eines Kunden (einer MSISDN) ist auf der SIM-Sleep-Management-Einheit 3 permanent und überschreibbar gespeichert. Es kann nur durch die Service Management Funktion 7 über die Schnittstelle 5 überschrieben werden.

Ist mindestens ein Dienst gebucht, wird in der SIM-Sleep-Management-Einheit 3 das Flag Network Access auf "On" gesetzt und damit Schalter 4 geschlossen. Dadurch werden die "normalen" SIM-Kartenfunktionen 6 aktiviert und die SIM-Karte 16 bucht sich wie jede andere SIM-Karte in das Mobilfunk-Netz 15 ein. Erst ab diesem Zeitpunkt entsteht durch Signalisierung und/ oder Gespräche Last im Netz.

### b) auf der SIM-Karte gespeichertes Diensteportfolio soll gelöscht werden, SIM soll in Schlafmodus verfallen

Über die Aktivierungsschnittstelle 13 wird vom Netzbetreiber oder Serviceprovider die Produktbuchung zu einem Kunden (einer MSISDN) geändert. Zum Abschalten der Dienste und zum Deaktivieren der SIM-Karte 16 wird die Produktbuchung des Kunden gelöscht. Diese Information wird über die Service-Management-Einheit 10 des Netzes in einer Datenbank (z.B. dem Home Location Register 11 und Visitor Location Register 12 des Netzwerkes 15) gespeichert.

Beim Einbuchen der SIM-Karte 16 in das Mobilfunknetz 15 (oder andereren Signalisierungsvorgängen, wie Locationupdate oder zeitlich gesteuertem Update) erhält die Service Managementeinheit 10 vom Mobilfunknetzwerk 15 eine Statusinformation. Daraufhin sendet die Service Managementeinheit 10 an die SIM-Karte 16 eine Information zum Update des in der SIM-Sleep-Management-Einheit 3 gespeicherten Diensteportfolio's (z.B. über SMS). Die "normalen" SIM-Kartenfunktionen (6) erkennen diese Information als ein Diensteportfolioupdate (z.B. durch eine als SIM-Karten-intern codierte SMS) und leiten diese über die Service Status Management Einheit 7 an die SIM-Sleep-Management-Einheit 3 weiter. In der SIM-Sleep-Management-Einheit 3 wird daraufhin das Diensteportfolio gelöscht und das Flag Network Access wird auf "off" gestellt. Daraufhin wird der Schalter 4 geöffnet und die "normalen" SIM-Kartenfunktionen 6 sind deaktiviert, z.B. durch eine nach den Ansprüchen geeignete Ausprägung erhalten sie keinen Strom mehr. Als Konsequenz ist die SIM-Karte 16 vom Netz 15 getrennt, es erfolgt keine Signalisierung mehr und die Karte verursacht keine Kosten durch das Eingebuchtsein im Netz.

### c) SIM-Karte 16 ist aktiviert, gespeichertes Diensteportfolio ist jedoch gelöscht

Die SIM-Karte 16 ist aktiviert, nach der genannten erfindungsgemäßen Ausprägung erhält sie (z.B. durch Einschalten der Mobilfunkeinheit) Strom. Zunächst wird nur die SIM-Sleep-Management-Einheit 3 mit Strom versorgt. Die "normalen" SIM-Kartenfunktionen 6 bleiben ausgeschaltet, da die Stromzufuhr durch den Schalter 4 unterbrochen ist. Die SIM-Sleep-Management-Einheit 3 liest das gespeicherte Diensteportfolio und erkennt, dass alle Dienste gesperrt sind. Demzufolge sorgt sie dafür, dass der Schalter 4 geöffnet bleibt und die "normalen" SIM-Kartenfunktionen 6 weiterhin deaktiviert bleiben. Die SIM-Karte 16 bleibt vom Netz 15 getrennt, es erfolgt keine Signalisierung und die Karte verursacht keine Kosten im Netz.

### d) Das auf der SIM-Karte 16 gespeicherte Diensteportfolio ist gelöscht, der Kunde hat beim Netzbetreiber aber neue Dienste gebucht

Über die Aktivierungsschnittstelle 13 gibt der Netzbetreiber oder Serviceprovider zentralseitig die Produktbuchung zu dem Kunden (bzw. seiner MSISDN) ein. Die Produktbuchung wird über die Service-Management-Einheit 10 des Netzes in einer Datenbank (z.B. Home Location Register 11 und Visitor Location Register 12) gespeichert.
Die SIM-Karte 16 erhält auf der Seite des Mobilfunkendgerätes 14 (z.B. durch Einschalten) Strom. Zunächst wird nur die SIM-Sleep-Management-Einheit 3 mit Strom versorgt. Die "normalen" SIM-Kartenfunktionen 6 bleiben ausgeschaltet, da die Stromzufuhr durch den Schalter 4 unterbrochen ist. Über einen Trigger 1 wird das Flag "Network Access" der SIM-Sleep-Management-Einheit 3 auch ohne Produktbuchung temporär (z.B. für die Dauer von 15 Minuten) auf "on" gestellt. Dies bewirkt, dass der Schalter 4 geschlossen wird. Damit erhalten die "normalen" SIM-Kartenfunktionen 6 Strom; die SIM-Karte bucht sich in das Netz ein.
Beim Einbuchen der SIM-Karte 16 in das Mobilfunknetz 15 erhält zentralseitig die Service-Management-Einheit 10 vom Mobilfunknetzwerk 15 eine Statusinformation. Die Service Management-Einheit 10 liest aus seiner Datenbank (z.B. dem Home Location Register 11 und Visitor Location Register 12), dass ein Update der Produktbuchung auf der SIM-Karte 16 erfolgen soll. Sie initiiert daraufhin das Versenden einer Information zum Update des in der SIM-Sleep-Management-Einheit 3 gespeicherten Diensteportfolios (z.B. über SMS). Die "normalen" SIM-Kartenfunktionen 6 in der Mobilfunkeinheit 14 erkennen den Empfang einer solchen Information als ein Diensteportfolioupdate (z.B. durch eine als SIM-Karten intern codierte SMS) und leiten diese über die Service Status Management Einheit 7 an die SIM-Sleep-Management-Einheit 3 weiter. In der SIM-Sleep-Management-Einheit 3 wird daraufhin das gewünschte Diensteportfolio permanent gespeichert. Durch die Buchung eines Produktes (z.B. Emergency Call) wird das Flag Network Access auf "on" gestellt. Damit bleibt der Schalter 4 bis zum nächsten Ausschalten der Stromversorgung 2 der SIM-Karte geschlossen und hält die SIM-Karte im eingebuchten Zustand im Netz.

## Patentansprüche

1. Verfahren zur zentralseitig gesteuerten Aktivierung und Deaktivierung einer in einem mobilen Endgerät befindlichen Netz-ldenfifikations-Karte (16), wobei
- über eine zentralseitige Aktivierungsschnittstelle (13) die Netz-Identifikations-Karte (16) initial in eine Produktbuchungs-Datenbank (11) eingetragen wird,
- die Netz-Identifikations-Karte (16) Informationen über gebuchte Dienste lokal speichern kann,
- zentralseitig Veränderungen der Produktbuchungs-Datenbank (11) vorgenommen werden können,
- ereignisgesteuert die Netz-Identifikations-Karte (16) aktiviert wird,
- die Netz-ldentifikations-Karte (16) nach Aktivierung über das Netzwerk Informationen für eine Zustandsänderung der Netz-Identifikations-Karte (16) erhalten kann,
- die Netz-Identifikations-Karte (16) aufgrund der über das Netz gesendeten Informationen über die Änderungen der Produktbuchungs-Datenbank die lokal gespeicherten Informationen über gebuchte Dienste ändert,
- die Netz-Identifikations-Karte (16) deaktiviert wird, wenn keine gebuchten Dienste vorhanden sind und
- die Netz-Identifikations-Karte (16) dauerhaft aktiviert wird, wenn gebuchte Dienste vorhanden sind.

2. Verfahren nach Anspruch 1,
**dadurch gekennzeichnet,**
**dass** die Zustandsänderung der Netz-ldentifikations-Karte (16) durch eine Veränderung in der Produktbuchungs-Datenbank initiiert wird.

3. Verfahren nach einem der vorhergehenden Ansprüche,
**dadurch gekennzeichnet,**
**dass** das die Netz-ldentifikations-Karte (16) aktivierende Ereignis durch einen Timer gesteuert wird.

4. Verfahren nach einem der vorhergehenden Ansprüche,
**dadurch gekennzeichnet,**
**dass** das die Netz-Identifikations-Karte (16) aktivierende Ereignis durch einen Schalter oder Code ausgelöst wird, den der Nutzers drücken oder eingeben muss.

5. Verfahren nach einem der vorhergehenden Ansprüche,
**dadurch gekennzeichnet,**
**dass** das die Netz-Identifikations-Karte (16) aktivierende Ereignis durch eine Veränderung von Netzeigenschaften ausgelöst wird.

6. Verfahren nach Anspruch 5,
**dadurch gekennzeichnet,**
**dass** die Veränderung der Netzeigenschaften eine Veränderung der Netzkennung ist.

7. Verfahren nach einem der vorhergehenden Ansprüche,
**dadurch gekennzeichnet,**
**dass** das die Netz-ldentifikations-Karte (16) aktivierende Ereignis das Erreichen eines definierten geographischen Gebietes ist.

8. Verfahren nach einem der vorhergehenden Ansprüche,
**dadurch gekennzeichnet,**
**dass** das die Netz-Identifikationskarte tragende Mobilfunkeinheit fest in einem Fahrzeug installiert ist.

9. Verfahren nach einem der vorhergehenden Ansprüche,
**dadurch gekennzeichnet,**
**dass** die Produktbuchungs-Datenbank innerhalb des Mobilfunknetzes lokalisiert ist.

10. Verfahren nach einem der vorhergehenden Ansprüche,
**dadurch gekennzeichnet,**
**dass** die Produktbuchungs-Datenbank außerhalb des Mobilfunknetzes lokalisiert ist.

11. Verfahren nach einem der vorhergehenden Ansprüche,
**dadurch gekennzeichnet,**
**dass** die Produktbuchungs-Datenbank ein Home Location Register ist.

12. Verfahren nach einem der vorhergenenden Ansprüche,
**dadurch gekennzeichnet,**
**dass** die Speicherung der Informationen über gebuchte Dienste einer SIM-Karte ausschließlich im Netzwerk erfolgt.

13. Verfahren nach einem der vorhergehenden Ansprüche,
**dadurch gekennzeichnet,**
**dass** die Netz Identifikations-Karte (16) eine SIM-Karte ist.

14. Verfahren nach einem der vorhergehenden Ansprüche,
**dadurch gekennzeichnet,**
**dass** die initiale Eintragungder Netz-ldentifikations-Karte (16) nach vordefinierbaren Kriterien vorgenommen wird.

15. Verfahren nach Anspruch 14,
**dadurch gekennzeichnet,**
**dass** eines der vordefinierbaren Kriterien die Landeszugehörigkeit des Nutzers ist.

16. Verfahren nach Anspruch 14,
**dadurch gekennzeichnet,**
**dass** eines der vordefinierbaren Kriterien das Heimat-Netz der Netz-Identifikationskarte (16) ist.

17. Verfahren nach Anspruch 14,
**dadurch gekennzeichnet,**
**dass** eines der vordefinierbaren Kriterien der Hersteller des Fahrzeugs ist, in dem die Netz-Identifikationskarte (16) eingebaut ist.

18. Verfahren nach Anspruch 14 und 17,
**dadurch gekennzeichnet,**
**dass** eines der vordefinierbaren Kriterien das Modell des Fahrzeugs ist, in dem die Netz-Identifikations-Karte (16) eingebaut ist.

19. Verfahren nach einem der vorhergenden Ansprüche,
**dadurch gekennzeichnet,**
**dass** die zentralseitige Aktivierung der Netz-ldentifikations-Karte (16) eine Abrechnungsfunktion im Netzwerk (15) auslöst.

20. Verfahren nach einem der vorhergehenden Ansprüche,
**dadurch gekennzeichnet,**
**dass** das Netzwerk (15) die Aktivierungsinformationen an die Mobilfunkeinheit (14) zu festen Zeitpunkten übermittelt, an denen die Netz-Identifikations-Karte (16) temporär aktiviert ist.

21. Verfahren nach einem der vorhergehenden Ansprüche,
**dadurch gekennzeichnet,**
**dass** das Netzwerk (15) von der Mobilfunkeinheit (14) für eine übermittelte Statusänderung eine Eingangsbestätigung als Rückantwort erhält und nach Eingang der Eingangsbestätigung im Netzwerk die gebuchten Dienste in der Produktbuchungs-Datenbank als abrechenbar **gekennzeichnet** werden.

22. Verfahren nach einem der vorhergehenden Ansprüche,
**dadurch gekennzeichnet,**
**dass** die über das Netzwerk an die Mobilfunkeinheit (14) übermittelten Informationen verschlüsselt werden.

23. Verfahren nach einem der vorhergehenden Ansprüche,
**dadurch gekennzeichnet,**
**dass** die über das Netzwerk übertragenen Informationen per SMS übertragen werden.

24. Verfahren nach einem der vorhergehenden Ansprüche,
**dadurch gekennzeichnet,**
**dass** die über das Netzwerk übertragenen Informationen per netzinterner Signalisierung übertragen werden.
